# EUROPEAN PATENT APPLICATION

(11) **EP 1 221 595 A1**
(43) Date of publication of application: **10.07.2002**
(21) Application number: 01308429.8
(22) Date of filing: 02.10.2001
(51) Int. Cl.: G01G 19/04, B61K 9/12

(54) **Measuring train parameters**

(30) Priority: 02.10.2000 GB 0024078
(71) Applicant: Strainstall Group Limited, Cowes, Isle of Wight PO31 7TB (GB)
(72) Inventor: Faulkner, P, Shepton Mallet, BA4 4TP Somerset (GB); Anderson, M, Box Hill, Nor Corsham,SN13 8HN Wiltshire (GB)
(74) Representative: Mounteney, Simon James

(57) **Abstract**

A method of detecting a wheel flat or an overloaded axle on a train travelling on a track is provided, the method comprising storing the outputs of a plurality of sensors (300, 302, 312, 306, 314, 308, 310, 342, 320, 322, 332, 324, 334, 326, 328, 340, 344) fitted to a bridge (30,40) at which the track passes when a train passes over that track and comparing the stored outputs with calibration data to derive at least one parameter indicative of a wheel flat or an overloaded axle.

## Description

The present invention relates to measurement of train parameters and has particular, but not exclusive, application to detection of overloaded axles and wheel flats on a train passing over a bridge.

It is known to measure the weight of trains as they pass over track in order to detect axle load. Overloaded axles have a negative effect on the life of the rail over which they are passing and it is consequently important to detect such overloads.

Unfortunately, existing measuring techniques require strain sensors to be fitted to rails or under the bed of the track. Both of these options require a track possession, in other words, trains have to be prevented from using the track for a period with consequent expense. The time available to install such systems is typically three or four hours per night and so it is not usually possible to perform the installation in a single night. In fact it can take many times more than this. This is clearly not only inconvenient but dramatically increases set-up costs as well. In addition, should any of the sensing equipment fail or require recalibration, the track needs to be closed again.

It is an object of the present invention to provide a method and apparatus that ameliorates the above disadvantages.

According to a first aspect of the present invention there is provided a method of detecting a wheel flat or an overloaded axle on a train travelling on a track, the method comprising storing the outputs of a plurality of sensors fitted to a bridge over which the track passes when a train passes over that track and comparing the stored outputs with calibration data to derive at least one parameter indicative of a wheel flat or an overloaded axle.

By sensing the train parameters from beneath a bridge there is no need to close the track for fitting of the necessary sensing equipment. The fitting of such equipment can then be carried out easily and, if preferred, in daylight. There are no adverse cost implications due to track closure for either installation or maintenance.

In a preferred embodiment an alarm is provided to alert the necessary personnel of an overloaded train or wheel flat. The sensors fitted to the bridge preferably comprise a plurality of strain sensors and at least one acceleration sensor. Still more preferably, existence of a wheel flat is detected using at least one acceleration sensor mounted on the soffit of a bridge.

The invention is preferably applied to a steel bridge having a number of crossbeams and the sensors are preferably mounted on the crossbeams which are more sensitive to train activity above than other parts of the bridge deck. The term "bridge" is to be understood to encompass certain structures that may be more commonly referred to as culverts. Provided that access is available and the culvert is arranged close enough below the track for adequate sensing it is to be regarded as a bridge for the purposes of this specification.

According to a second aspect of the present invention there is provided a bridge carrying at least one track for rail traffic, the bridge comprising a plurality of sensors responsive to trains travelling on the at least one track and further comprising means for storing an output of the plurality of sensors in order to detect a wheel flat or an overloaded axle on a said train.

The bridge may effectively be converted into a weighbridge by addition of the monitoring equipment.

According to a third aspect of the present invention there is provided a logging apparatus comprising an input for at least one sensor for fitting to a bridge carrying at least one track for rail traffic, the logging apparatus comprising means for storing an output signal from the at least one sensor and means for identifying the presence of a wheel flat or an overloaded axle on a passing train.

Further preferred features will become apparent from reading the following description of a preferred embodiment of the invention in conjunction with the accompanying drawings, in which:
Figure 1 shows a perspective view of a train crossing a bridge to which an embodiment of the invention has been applied;
Figure 2 shows a schematic plan view of a pair of bridge decks to which the invention is to be applied;
Figure 3 shows a schematic plan view of a first bridge deck, showing the locations of two types of sensor;
Figure 4 shows a schematic plan view of a second bridge deck, showing the locations of two types of sensor;
Figure 5 shows a block schematic diagram of the logging/analysis circuitry;
Figure 6 shows graphs of strain and acceleration against time for a first train ;
Figure 7 shows graphs of strain and acceleration against time for a second train; and
Figures 8 and 9 show flow charts for activities of the processor shown in Figure 5.

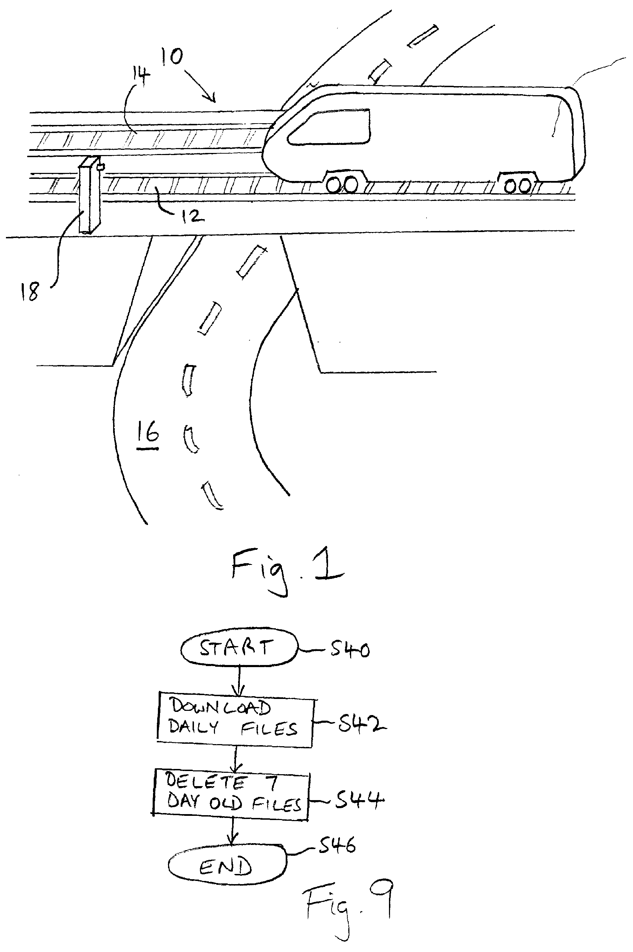

Figure 1 shows a rail underbridge 10 carrying two rail tracks 12, 14 passing over a road 16. A rail underbridge is one in which the bridge is beneath the train, i.e. it supports the trains travelling above. A number of sensors (not shown) are installed on the underside of the bridge and an optional digital camera 18 having infra red capabilities for taking photographs after dark is also provided.

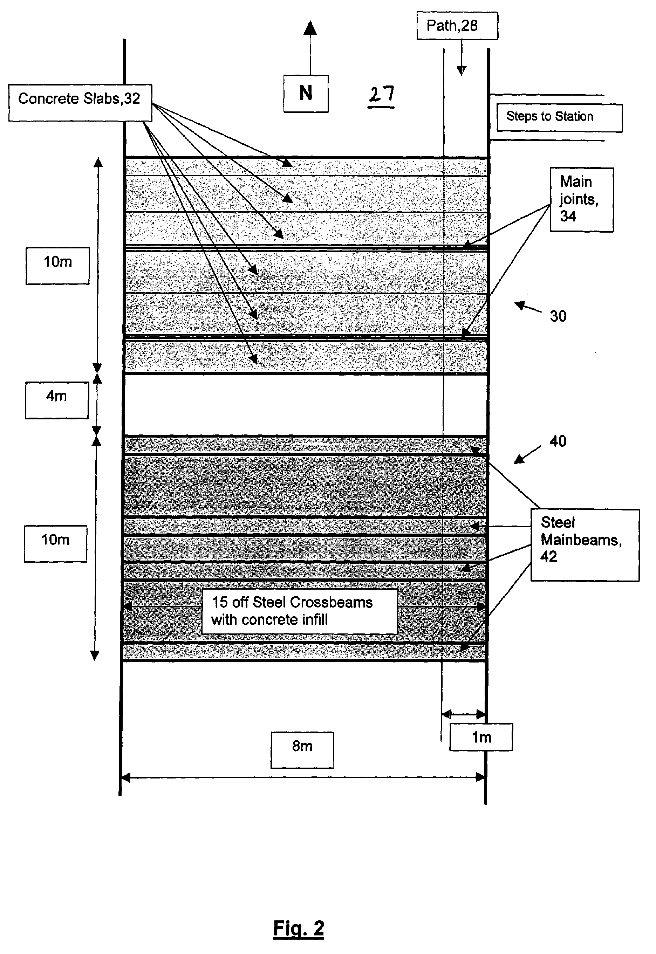

Figure 2 shows a plan view of a pair of bridges (which butt against each other) to which the invention has been applied. A concrete bridge 30 carries two rail tracks (not shown) for slow (local) train traffic. The bridge comprises six concrete slabs 32 which run in the direction of train travel (left-right in the diagram) having a total width of 10 metre. Main joints in the bridge are shown at 34.

A steel bridge 40 for fast traffic comprises 4 steel mainbeams 42 and 15 steel crossbeams (not shown) with concrete infill. This type of bridge is particularly well suited to the present invention because the crossbeams are more sensitive to train activity on the bridge.

Under the bridge is a road 27 and a path 28 of 1 metre width. The total width of the road and path is 8 metre.

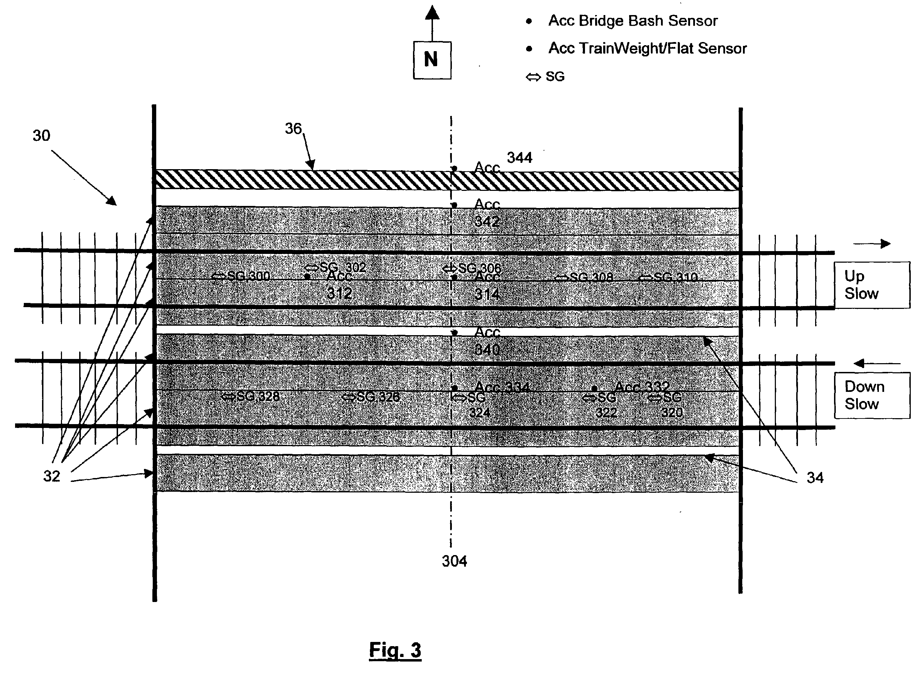

Figure 3 shows a plan view of the concrete bridge carrying the up slow and the down slow tracks. In addition to the features already described with reference to Figure 2 there is a collision beam 36 whose purpose is to prevent overheight road vehicles from damaging the bridge in a collision.

Each of the up and down tracks has five strain sensors SG and two acceleration sensors Acc mounted beneath them on the bridge structure. Any suitable technique for mounting the sensors may be used such as adhesive, screws and plugs, bolting, spot welding, welding etc. or combinations of these such as adhesive plus bolting, screwing or plugging. The mounting pattern for the down track is the exact opposite of that for the up track so that the same sensor layout is presented to an oncoming train in each case.

Beneath the up track are provided (in the direction of train travel) a strain sensor 300 near to a first end of the bridge; a strain sensor 302 and an acceleration sensor 312 mounted substantially half way between the first end of the bridge and a centreline 304 of the bridge, a strain sensor 306 and an acceleration sensor 314 mounted substantially at the centreline of the bridge, a strain sensor 308 mounted substantially halfway between the centreline 304 and a second end of the bridge and a strain sensor 310 mounted towards the second end of the bridge. Also beneath the bridge, but offset from the track is a further acceleration sensor 342. This sensor is optional and arranged for detecting lateral accelerations i.e. a bridge bash condition.

Beneath the down track are provided (in the direction of train travel) a strain sensor 320 near to the second end of the bridge; a strain sensor 322 and an acceleration sensor 332 mounted substantially half way between the second end of the bridge and the centreline 304 of the bridge, a strain sensor 324 and an acceleration sensor 334 mounted substantially at the centreline of the bridge, a strain sensor 326 mounted substantially halfway between the centreline 304 and the first end of the bridge and a strain sensor 328 mounted towards the first end of the bridge. Also beneath the bridge, but offset from the track is a further acceleration sensor 340. This sensor is optional and arranged for detecting lateral accelerations i.e. a bridge bash condition.

In addition to the sensors mounted beneath the tracks a further acceleration sensor 344 is provided, mounted on the collision beam 36. This acceleration sensor is not concerned with measuring train characteristics but rather to detect contact between overheight road vehicles and the collision beam. Output from this sensor can be used to trigger a "bridge bash" warning as will be described subsequently.

While any suitable sensors may be employed, it is preferred to employ a full bridge strain sensor having a 4-20mA amplifier. Such a strain sensor is to be mounted at each end to the structure of the bridge. The strain in the structure causes a movement of the ends of the sensor and strain gauges on the sensor then give an output which is proportional to the structural strain, generally in an amplified form. It is important to note that the sensor should be reasonably elastic since otherwise it will affect the readings of strain. For the accelerometer, although many accelerometers are suitable for use in this arrangement, +/-10g accelerometers having a 4-20mA integrated amplifier have proved successful.

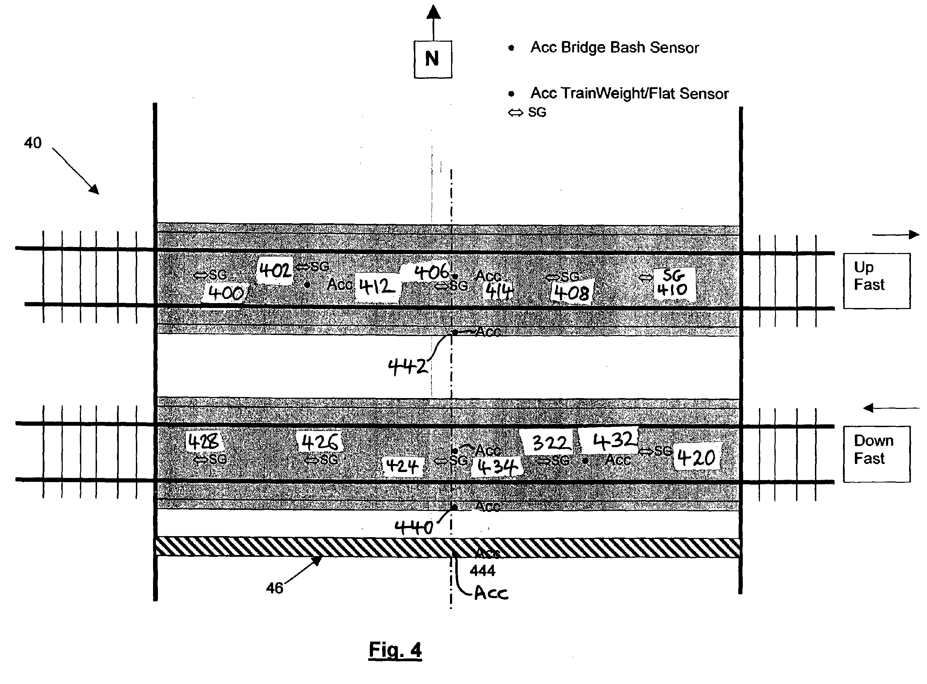

Figure 4 shows the steel bridge that carries the up and down fast tracks. A collision beam 46 is provided which carries an acceleration sensor 444. Apart from this sensor the fast tracks are provided with a set of sensors that is analogous to those fitted beneath the slow tracks.

Beneath the up track are provided (in the direction of train travel) a strain sensor 400 near to a first end of the bridge; a strain sensor 402 and an acceleration sensor 412 mounted substantially half way between the first end of the bridge and a centreline 404 of the bridge, a strain sensor 406 and an acceleration sensor 414 mounted substantially at the centreline of the bridge, a strain sensor 408 mounted substantially halfway between the centreline 404 and a second end of the bridge and a strain sensor 410 mounted towards the second end of the bridge. Also beneath the bridge, but offset from the track is a further acceleration sensor 442. This sensor is optional and arranged for detecting lateral accelerations i.e. a bridge bash condition.

Beneath the down track are provided (in the direction of train travel) a strain sensor 420 near to the second end of the bridge; a strain sensor 422 and an acceleration sensor 432 mounted substantially halfway between the second end of the bridge and the centreline 404 of the bridge, a strain sensor 424 and an acceleration sensor 434 mounted substantially at the centreline of the bridge, a strain sensor 426 mounted substantially half way between the centreline 404 and the first end of the bridge and a strain sensor 428 mounted towards the first end of the bridge. Also beneath the bridge, but offset from the track is a further acceleration sensor 440. This sensor is optional and arranged for detecting lateral accelerations i.e. a bridge bash condition.

In addition to the sensors mounted beneath the tracks a further acceleration sensor 444 is provided, mounted on the collision beam 46. This acceleration sensor is not concerned with measuring train characteristics but rather to detect contact between overheight road vehicles and the collision beam. Output from this sensor can be used to trigger a "bridge bash" warning as will be described subsequently.

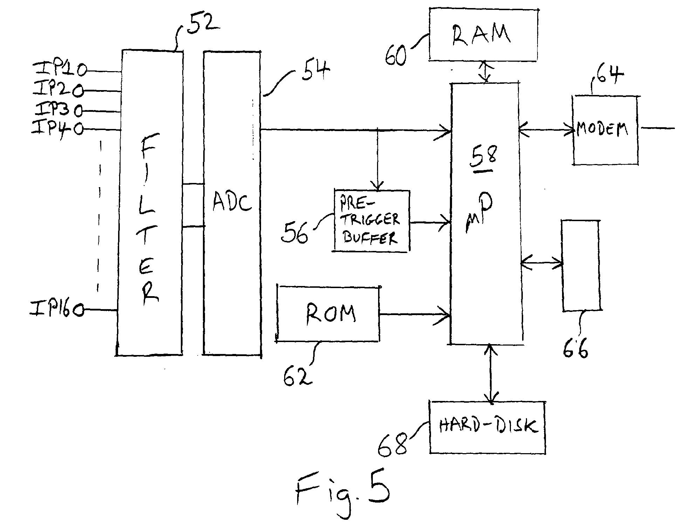

The outputs of the sensors (buffered as necessary) are connected via armoured and waterproof cables to a data logger 50 which is shown in block schematic form in Figure 5. The arrangement shown has 16 inputs IP1 - IP16 for receiving the outputs of various sensors. Because each track is provided with seven sensors, the logger can operate with a two-track arrangement (with two "spare" inputs for bridge-bash sensors). It is preferred to feed the outputs of the bridge bash sensors to a separate ADC board. This makes modular arrangements easier to provide.

Consequently one such logging apparatus will be required for each of the bridges shown in Figure 2. Clearly a logger having more (or fewer) inputs may be provided as required. A 16 input apparatus is preferred because the majority of bridge installation will be two-track and so this is a cost-effective piece of apparatus. A video card (optional, not shown) may be provided for outputs from one or two digital cameras.

Each of the inputs is connected via an anti-aliasing filter 52 to an analogue-to-digital converter (ADC) 54. This may comprise a single ADC for each input or, usually, a smaller number of ADCs or just one ADC multiplexed between the sensors. The digital outputs of the ADC 54 are connected to an input (i.e. a suitably-addressed connection to the data bus) of a microprocessor 58. The output of ADC 54 is also connected to a pre-trigger buffer 56. The purpose of this buffer is to store at least five seconds of data from each of the sensors at any one time. When a signal is detected that is believed to indicate the presence of a train or bridge-bash, this buffer then contains a record of the previous five seconds of activity and thus improves the recognition capabilities of the apparatus. An output of the buffer 56 is also connected to an input of the microprocessor so that the contents of the buffer can be read and analysed when required. The buffer may alternatively be provided using software and random access memory (RAM) addressed by the microprocessor.

Additionally, the microprocessor is connected to RAM 60, ROM 62, a modem 64, a diagnosis socket 66 and a storage device such as a hard disk drive 68. With the exception of socket 66 these components are well known and require no further explanation here. The socket 66 is provided to permit calibration and fault finding by connection of another PC such as a laptop PC. Alternatively, three further sockets may allow the connection of a keyboard, screen and mouse for set-up and trouble-shooting purposes.

The modem 64 is connected to an RS232 or equivalent serial link to the nearest signal box via a dedicated line. A modem may also be connected to any suitable communication medium such as a fixed line, Plain Old Telephone Service (POTS), a digital cellular telephone, ISDN, DSL etc. This allows the logger to periodically download stored information, for example via email over the Internet, and to communicate more urgent issues such as overloaded trains and bridge-bash situations. The modem may also be used to remotely download different analysis routines, new configurations and to interrogate the logger. This may be particularly useful for trouble-shooting purposes. While the following assumes that the analysis of sensor output is carried out at the logging apparatus it will be clear that a "dumb" logging apparatus may alternatively be employed which simply downloads data for analysis elsewhere. It is preferred, however, to analyse the data at the logger so that the amount of information transmitted to a remote site is smaller.

The logger is powered by mains supply backed up by a battery or Unintrruptible Power Supply (UPS) to ensure that logging can continue even in the event of a power cut. A heater (not shown) is also provided to avoid problems arising from extremely cold weather and/or condensation. Activation of such a heater by thermostatic means is well known and will not be described further here.

In operation, the ADC is arranged to sample each of the sensor outputs at a rate of 500 samples per second (500Hz) which is sufficiently fast to ensure accurate data capture of train data on a per-axle basis, even at the highest speeds possible. Simple calculation shows that a train travelling at 300kph will travel approximately 17cm between samples and so a useful set of data samples can be stored. While it will be possible to store samples in RAM and then download them to the hard disk drive of the logger it is preferred to stream the data directly to the disk. This avoids any problems that might arise due to too little RAM in case of long, slow trains or a number of trains in quick succession.

The sample rate may be adjusted to suit the environment. For example, if the anti-aliassing filter can only exclude signals above 4kHz then a sample rate of 2kHz should be employed (half the rate at which the anti-aliasing filter operates). The peak sensor outputs are important in this application and it is necessary to do more than meet the Nyquist criterion for signal sampling. Ideally the sample rate is around 10 times the frequency of the signals being measured. In this case a sample will be taken within 5% of the time of occurrence of the signal peak. In the case of a sinusoid, a sample will be taken within approximately 2.5% of the peak value.

A convenient realisation of this circuit is an industrial (rack mounted) personal computer (PC). A typical set of features would be:
Intel/AMD 500 Mhz processor
64Mb RAM (expandable up to 256Mb)
9.1 Gb IDE hard disk or equivalent
3.5" diskette drive
National Instrument ADC input cards (2x16ch (max. 2x64ch))
Serial/Ethernet interface card together relevant connectors
Connectors for temporary mouse, keyboard & monitor (for maintenance)
Video card (optional)
[* 'intel', 'AMD' and 'National Instrument are registered trade marks]

The unit will typically be installed at the side of the track and so subject to weathering, fluctuations in temperature etc. The unit must be reliable for long periods without attention.

Once the data has been gathered it must be analysed. This will be discussed with reference to the following drawings. There are two main functions of the apparatus described with reference to Figure 5 - data logging and alarm functions in response to overloaded trains, wheel flats or bridge bashes.

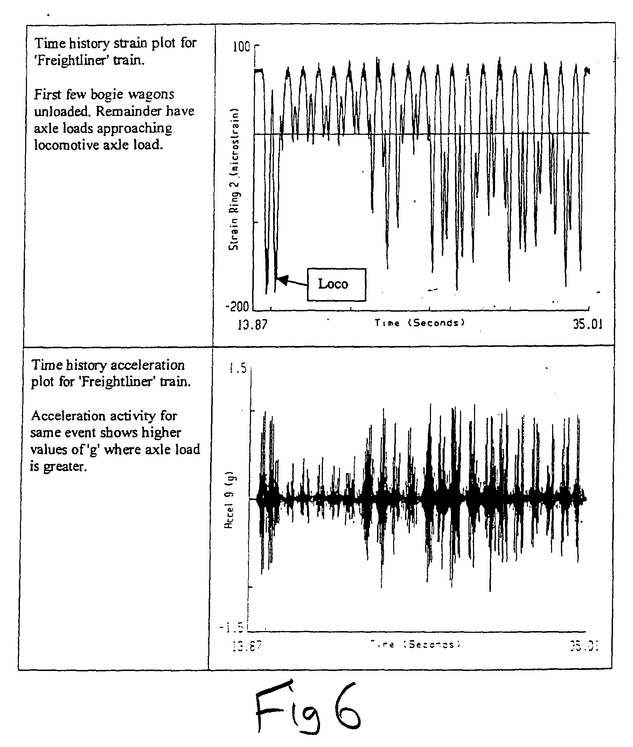

Figure 6 shows a time history strain plot for a "freightliner" train and a time history acceleration plot for the same train. The left hand side of the graphs corresponds with the locomotive and a pair of large signal spikes correspond with the axles of the locomotive. The first 6 wagons behind the locomotive are not loaded and so produce only small excursions on the strain/time plot. The remainder of the wagons are more heavily loaded with some of them approaching the same axle load as the locomotive.

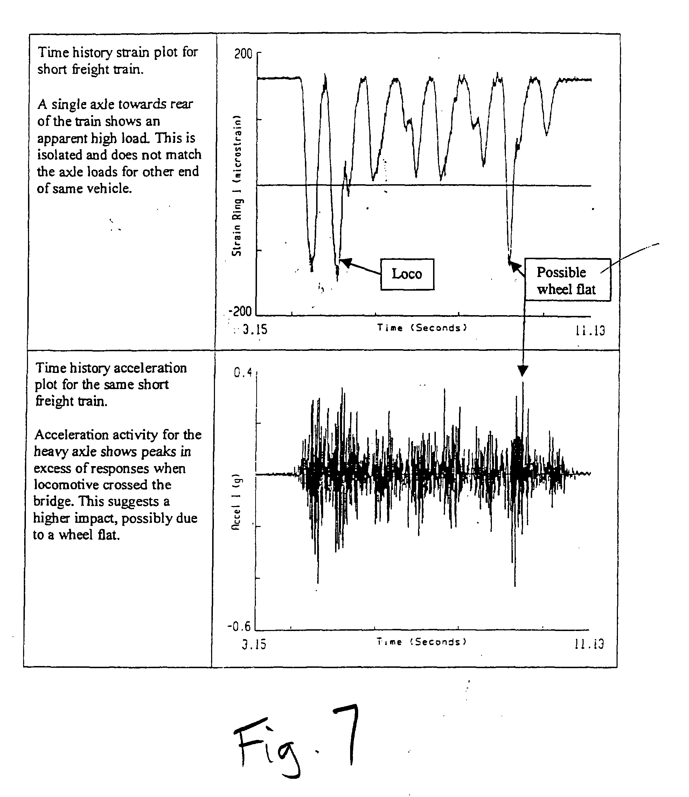

The time history acceleration plot has a pattern of the same duration but has a symmetrical arrangement of excursions from the zero value. The acceleration is greater for those axles that are more heavily loaded. Figure 6 does not indicate the benefit of providing both strain and acceleration sensors. For this we need to look to Figure 7.

Figure 7 shows a pair of plots similar to those shown in Figure 6 but for a different train, in this case a short freight train. The locomotive produces a similar pair of excursions to those in the previous graphs. However, a single axle on a wagon distant from the locomotive has a similar sized excursion to that provided by each of the locomotive axles. It is unlikely that an overloaded wagon is responsible for these large values of strain and acceleration because it would be expected that a similar value of each variable would be recorded for both axles on a wagon. The acceleration plot serves to confirm the suspicion that a wheel-flat is responsible by showing high values of acceleration at the corresponding time (i.e. simultaneously).

By suitable calibration of the bridge after installation of the sensors, the occurrence of both overloaded axles and wheel-flats can be determined with a very high degree of confidence.

Calibration is performed as follows. While a manual calibration process is described, it could readily be (at least partially) automated.

Firstly, we create data files for time series train crossings. We then relate the axle weights to the strain signal and axle weight and speed to accelerometer output. We can then obtain the relationship between strain and axle weight at each sensor because the axle weight is known (especially for locomotive):
Axle weight 1 = m1 x strain 1
Axle weight 2 = m2 x strain 2
and so on to generate five calibration constants m1...m5.

For a particular speed value (determined from the distance between sensors on the ground) we then consider the output of the accelerometers. We then relate the peak accelerometer output to the speed and the axle weight for each of the two accelerometers on the track being calibrated. In other words we determine acceptable accelerometer outputs for a train of a particular weight travelling at a particular speed.

These figures are then stored in a look-up table so that we know the maximum acceleration at a known speed for a given axle weight with no wheel flats. If an accelerometer value is subsequently received that exceeds this calibrated amount by a significant margin, such as 50%, then it can be inferred that a wheel flat is present. The value including the margin can conveniently be stored as a threshold in the lookup table. The look up table is conveniently stored on the hard disk drive of the logger but could equally be stored in PROM or other non-volatile storage medium.

Passing trains create (mostly) vertical accelerations whereas bridge bashes cause lateral accelerations. The threshold for determining that a bridge bash has occurred should be higher than lateral accelerations caused by passage of trains.

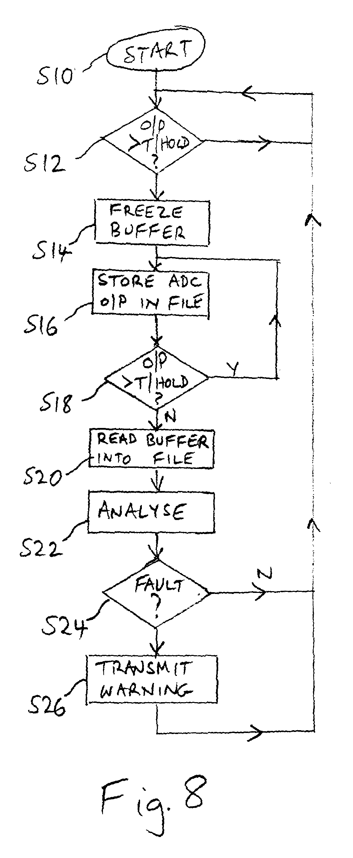

The software routine for logging and for detecting bridge bash, overloaded axles and wheels flats is shown in Figure 8. Note that his routine may conveniently be implemented as an interrupt service routine, triggered by sensor outputs over a threshold.

The routine starts at step S10 and determines at step S12 whether any sensor output is over a low threshold indicating presence of a train. If not then processing returns to step S12. If any of the sensor outputs is determined to be over threshold then processing proceeds to step S14 at which the pre-trigger buffer is "frozen". In the case of a pre-trigger buffer implemented by software this step simply suspends the operation of the pre-trigger buffer routine.

The processor then performs a loop through step S16 which logs the values from each of the sensors at the appropriate sampling rate and decision step S16 which determines whether the outputs of the sensors are still above threshold (i.e. is a train still present?).

Once the train is determined to have passed, processing proceeds to step S20 at which the pre-trigger buffer is read into a file. At step S22 the pre-trigger and post-trigger data is analysed to determine:
Direction of travel
Track being crossed
Whether there is a multiple crossing (flag file to this effect)
Create time and turning point file
Weight of each axle
Train classification (from turning point file)
Store axle number and weight if axle over threshold
Total train weight
Compare axle weight with acceleration threshold to determine whether a wheel flat s present and flag file as appropriate

At step S24 the routine determines whether any of the sensor values was out of range, in other words has there been a bridge bash, an overloaded axle or a wheel flat. If the answer to any of these is YES then a warning is transmitted to the remote control centre at step S26. After this, or if there is no sensor reading that is out of range, processing proceeds to steps S12 to await the next train. Clearly the step S26 could be arranged to send a facsimile message, an email or a SMS message to a GSM mobile telephone and so on. A voice synthesiser could even be provided to alert emergency services when appropriate - for example in the case of a bridge bash.

There is also a cumulative file maintained which stores the number of axles and trains in each direction, the total number of axles and trains as well as the number of axles within range, the number that are out of range and the number of wheel flat axles. For bridge bash sensors the file stores the direction of travel, the part of the bridge being struck, the severity of the impact and the date/time at which it occurred.

The digital camera (where fitted) can be arranged to take at least one picture to identify the train. More pictures may be taken if desired, for example where records concerning the constitution of a particular train may not be accurately kept.

Other points to note about the software are the following.

Thermal effects on the bridge over time are automatically compensated for because the system resets the datum levels when no trains are present. (Threshold trigger levels must, of course, relate to the current datum).

If the bridge has more than one track the activity on the adjacent track is monitored. It may be that there is little effect upon the sensors beneath the adjacent track, for example where the bridge is a heavy one or the tracks are well separated. Where there is a noticeable effect this can be filtered out by magnitude comparison or subtraction if two trains pass over the bridge at the same time (taking into account the effect caused at each instant to the sensors under the other track). In any case, the data may be flagged.

Figure 9 shows a short routine that is carried out at regular intervals, for example daily. The routine starts at step S40 and proceeds to step S42 at which the files generated during the previous 24 hours are downloaded to the remote computer. At step S44 the files corresponding to the 7th previous day are deleted. In this way the storage capacity of the logger is not exceeded but a log of the previous week's activity is retained should anything go awry in transmission to, or at, the host computer.

A track operator thus has all of the information required to identify trains that are likely to damage the track. The track operator receives the information immediately so he can decide what action to take with regard to the overloaded or defective train, or in the event of a bridge bash. He also has access to the management records so that action can be taken against the perpetrator of any such incident.

While the present invention has been described with reference to particular examples it is to be understood to encompass any novel teaching herein whether explicit or implicit and any generalisation thereof.

## Claims

1. A method of detecting a wheel flat or an overloaded axle on a train travelling on a track, the method comprising storing the outputs of a plurality of sensors fitted to a bridge over which the track passes when a train passes over that track and comparing the stored outputs with calibration data to derive at least one parameter indicative of a wheel flat or an overloaded axle.

2. A method as claimed in claim 1, further comprising a step of raising an alarm in response to the at least one parameter lying outside acceptable limits.

3. A method as claimed in claim 2, wherein the step of raising the alarm comprises transmitting an electronic signal to a remote location.

4. A method as claimed in claim 1, claim 2 or claim 3, wherein the sensors comprise a plurality of strain sensors and at least one acceleration sensor.

5. A method as claimed in claim 4, wherein the at least one parameter comprises an acceleration associated with a particular axle.

6. A bridge carrying at least one track for rail traffic, the bridge comprising a plurality of sensors responsive to trains travelling on the at least one track and further comprising means for storing an output of the plurality of sensors in order to detect a wheel flat or an overloaded axle on a said train.

7. A bridge as claimed in claim 6, further comprising means responsive to an output of the plurality of sensors lying outside of an acceptable range for generating a warning signal.

8. A bridge as claimed in claim 6 or claim 7 which carries at least two tracks for rail traffic, further comprising means responsive to simultaneous train traffic on the at least two tracks for storing an indication that the output of the plurality of sensors may be corrupted.

9. A bridge as claimed in claim 6, claim 7 or claim 8, further comprising at least one camera for photographing trains travelling on the at least one track.

10. A bridge as claimed in any one of the claims 6 to 9, further comprising at least one further sensor responsive to a force applied to the side of the bridge.

11. A logging apparatus comprising an input for at least one sensor for fitting to a bridge carrying at least one track for rail traffic, the logging apparatus comprising means for storing an output signal from the at least one sensor and means for identifying the presence of a wheel flat or overloaded axle on a passing train.

12. A logging apparatus as claimed in claim 11, further comprising means responsive to an output signal from the at least one sensor outside a predetermined range for generating an alarm signal.

13. A logging apparatus as claimed in claim 11 or claim 12, comprising inputs responsive to a plurality of strain sensors and at least one acceleration sensor.

14. A logging apparatus as claimed in claim 13, wherein the means for identifying the presence of a wheel flat on a passing train comprises means responsive to a strain sensor output above a predetermined threshold and a simultaneous acceleration sensor output above a predetermined threshold for determining the presence of a train having a wheel flat.

15. A logging apparatus as claimed in any one of the claims 11 to 14, further comprising means for periodically downloading stored data to a remote site.
